# EUROPEAN PATENT SPECIFICATION

(11) **EP 1 820 383 B1**
(45) Date of publication and mention of the grant of the patent: **19.07.2017**
(21) Application number: 06110027.7
(22) Date of filing: 16.02.2006
(51) Int. Cl.: A01C 15/00

(54) **Hopper with wall extensions**
Behälter mit Aufsatzbehälterelementen
Trémie avec des extensions pour les parois

(43) Date of publication of application: 22.08.2007
(73) Proprietor: Kverneland ASA, 4355 Kvernaland (NO)
(72) Inventor: Klaver, Mark Theodorus, 1715 HC Spanbroek (NL)
(74) Representative: Voncken, Bartholomeus Maria Ch.

(56) References cited:
- EP-A- 0 982 191
- DE-A1- 4 405 479
- DE-A1- 10 359 179
- US-A- 4 460 214

## Description

The invention firstly relates to a hopper as defined in the preamble of claim 1.

Such a hopper for example has a bottom wall which is provided with an outlet opening, below which a distribution device is provided for distributing seeds, fertilizer or alike on a field. The hopper is intended to house the goods to be distributed (such as, for example, granular seeds or fertilizer). In some occasions it is desirable to increase the dimensions of the hopper, such that it can contain an increased amount of goods. It is known, in such a case, to position a wall prolonging on top of the side walls. Said wall prolonging may be mounted to the hopper by means of bolts or screws engaging the edge sections of the side walls. However, not only is such a wall prolonging heavy and is manipulating it difficult (for example needing at least two persons for mounting or dismounting it), but also the use of the bolts or screws (which need to be provided in a large amount on top of all side walls to ensure a secure attachment of the wall prolonging to the hopper) makes the mounting or dismounting a lengthy and tedious job.

A hopper in accordance with the preamble of the main claim is known from DE 103 59 179 A1. Herein flexible plastic wall extensions can be mounted on side walls through a snap connection between those parts. Another hopper with wall extensions made of metal is known from US 4 460 214 A1. It is an object of the present invention to provide an improved hopper of the type referred to above.

Therefore, in accordance with a first aspect of the present invention, such a hopper is characterized in accordance with claim 1.

The wall extensions only are connected to each other by connecting means, but there are no connecting means provided for connecting or attaching the wall extensions to the corresponding side walls. The connection between a side wall and corresponding wall extension occurs solely through the cooperation between the edge section of a side wall and the respective recess in the wall extension. Therefore, mounting the wall extensions can be realised quickly, one by one, by simply sliding a wall extension with its recess over the edge section of the respective side wall. This can be done by a single person. When the desired number (at least two in an adjoining position) of wall extensions has been positioned in this manner, adjacent ones are interconnected by the connecting means. Thereafter, removing the wall extensions from the side walls is not possible without firstly disconnecting the connecting means.

The fact that the wall extensions are fabricated of aluminum adds to a lightweight construction which can be handled easily by a single person during mounting or dismounting. Moreover, because a hopper often is attached to the rear side of a tractor in a suspended state, its weight should be kept as low as possible to maintain the centre of gravity of the tractor-hopper assembly in a foremost position (thus preventing the tractor from tipping over rearwards).

It is noted, that the hopper may be of a type in which the side walls and bottom wall merge into each other without a well-defined boundary there between. The inclination of the edge sections relative to the side walls can vary, and also may be 90°.

Although it is possible that only a limited number of the side walls of the hopper are provided with such wall extensions (for example when the hopper is of a tilting type and at least one of its sides should be not to high to allow the goods to flow out of the hopper when it is tilted), in a preferred embodiment of the hopper all side walls are provided with such wall extensions.

Further, it is preferred that the recess in each wall extension is dimensioned such, that an outer surface of the wall extension is substantially flush with an outer surface of the corresponding side wall. As a result the hopper has no projecting or recessed parts (thus limiting the risk of damaging parts), whereas it further obtains an attractive appearance.

According to yet another embodiment of the hopper according to the present invention, it has a rectangular outline with four side walls. But it should be noted, that the invention is likewise applicable to hoppers with other outlines.

When, in accordance with yet another embodiment of the hopper according to the invention, the edge sections of the side walls are inclined upwardly and inwardly, the connection between a side wall and corresponding wall extension occurs in such a manner that an inflow of water (e.g. rain) is surely prevented at the interface between the side wall and wall extension.

Preferably the connecting means comprise angled plates each having two wings connected to the adjacent wall extensions by mounting means. For example, each wing can be provided with holes which, in the operative position of the angled plate, are aligned with threaded holes in the frontal ends of the adjacent wall extensions for receiving therein bolts, screws or alike. Thus, after positioning the wall extensions, the angled plates are provided between adjacent wall extensions. Its holes are then aligned with the threaded holes of the wall extensions, whereafter the bolts or screws are inserted through the holes and into the threaded holes, and screwed tightly to attach the wall extensions to each other through the angled plate.

Further, when according to yet another embodiment of the inventive hopper the wall extensions have a cross-sectional profile and wherein the wings of the angled plate have such dimenions as not to extend beyond the cross-sectional profile of the wall extensions, it is prevented that projecting parts are created.

It is also possible that each angled plate is covered by a releasable cover. The application of such a cover may be facilitated when it is provided with engagement means releasably cooperating with the heads of the bolts, screws or alike. Then no additional mounting means (such as screws or alike) are needed.

Preferably such a cover has an outer wall extending substantially flush with the outer surface of the wall extensions. This improves the appearance of the hopper, also in the corner regions between adjacent wall extensions, and such a cover will protect the angled plate with its mounting means.

The cover may be provided with at least one depression for receiving a reflector means or alike. Such a depression, however, also could be used for receiving information sheets or alike offering information about the hopper and/or the goods contained therein.

Manufacturing the hopper is extremely easy. So, it is conceivable that the wall extensions are lengths of extrusion profiles, which are cut at the appropiate length from an extrusion profile with indetermined length.

In a further development of the hopper according to the present invention, the wall extensions at their top are provided with edge sections extending inclined upwardly. Basically, such edge sections can correspond to the edge sections of the side walls, such that on top of a wall extension a further wall extension can be provided in a corresponding manner as described before with respect to the original wall extension. This makes it possible to further increase the height of the hopper as desired.

Finally it is noted, that it is not necessary for all wall extensions to have the same height; thus at least some of the adjacent wall extensions could have different heights. However, in such a case an angled plate, when applied, should have a correspondingly amended shape.

The invention secondly relates to a wall extension presenting all the features of the wall extension disclosed herein and being thus constructed and evidently intended for use in the hopper as claimed herein.

Hereinafter the invention will be elucidated while referring to the drawing in which embodiments of the hopper in accordance with the present invention are illustrated, and in which:
Fig.1 shows a perspective view of an examplary hopper without extension walls;
Fig.2 shows the hopper of fig.1 with extension walls;
Fig.3 shows the hopper of fig.1 with different extension walls;
Fig.4 shows the hopper of fig.1 with yet different extension walls;
Fig.5 shows the hopper of fig.1 with still different extension walls;
Fig.6 shows a section according to VI-VI in fig.4 on a larger scale;
Fig.7-10 show succesive stages while mounting extension walls, and
Fig.11 shows perspectively and from the rear side a cover.

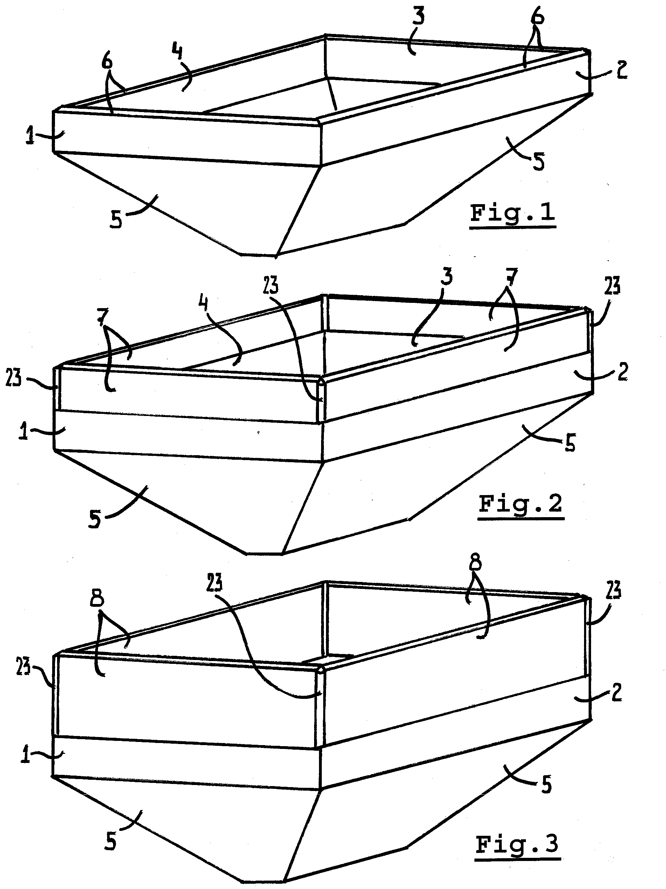

Firstly referring to fig.1, an example of a hopper according to the invention (however prior to the application of the extension walls) is illustrated in a perspective view. In the illustrated embodiment the hopper basically comprises four side walls 1-4 connected at their lower ends to respective bottom walls 5. The lowermost part of said bottom walls can have a specific shape and could comprise specific arrangements (such as, for example, for distributing seeds or fertilizer on a field) which, however, fall beyond the scope of the invention and thus will not be specified further within the context of this description. Each side wall 1-4 is at its top provided with an edge section 6 extending inclined inwardly and upwardly.

In fig.2 extension walls 7 having a first height have been positioned on top of the respective side walls 1-4. The manner of positioning said extension walls 7 and maintaining these in such a position will be elucidated further below.

In fig.3 extension walls 8 having a second, greater height have been positioned on top of the respective side walls 1-4. Again, the manner of positioning said extension walls 8 and maintaining these in such a position will be elucidated further below.

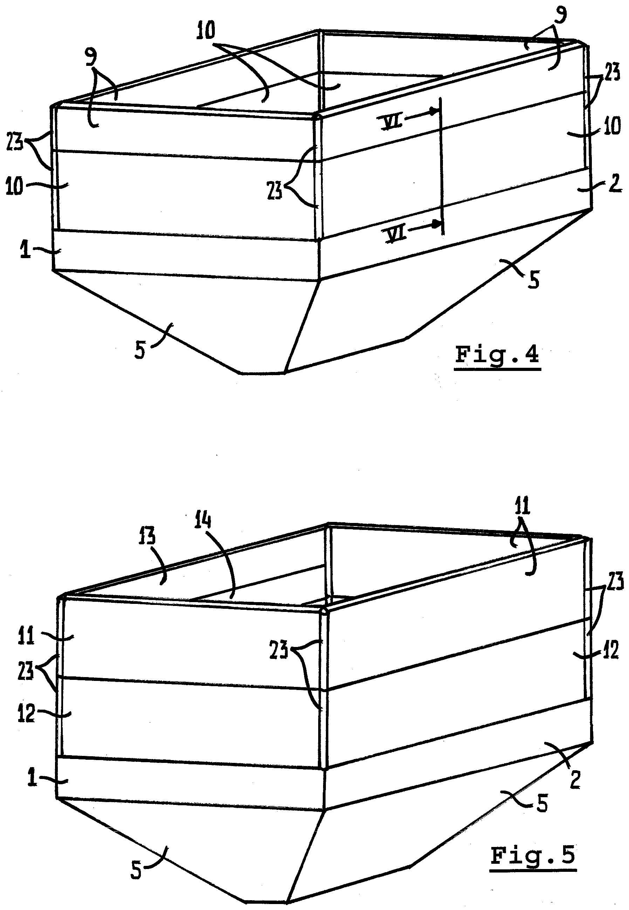

In fig.4 a double layer of extension walls 9 and 10 having a first and second height, respectively, has been positioned on top of the respective side walls 1-4.

In fig.5 a configuration of the hopper is illustrated, in which on three sides a double layer of extension walls 11 and 12 having both a second height has been positioned on top of the respective side walls 1-3. On top of the fourth side wall 4 (not visible) a different number (for example four) of smaller sized extension walls (of which only the top two extension walls 13 and 14 are visible) has been positioned.

From fig.2-5 it appears, that the present invention allows many combinations of extension walls to be provided on top of the side walls 1-4. Although not shown here, it is also possible that on top of some of the side walls 1-4 none such extension walls are provided.

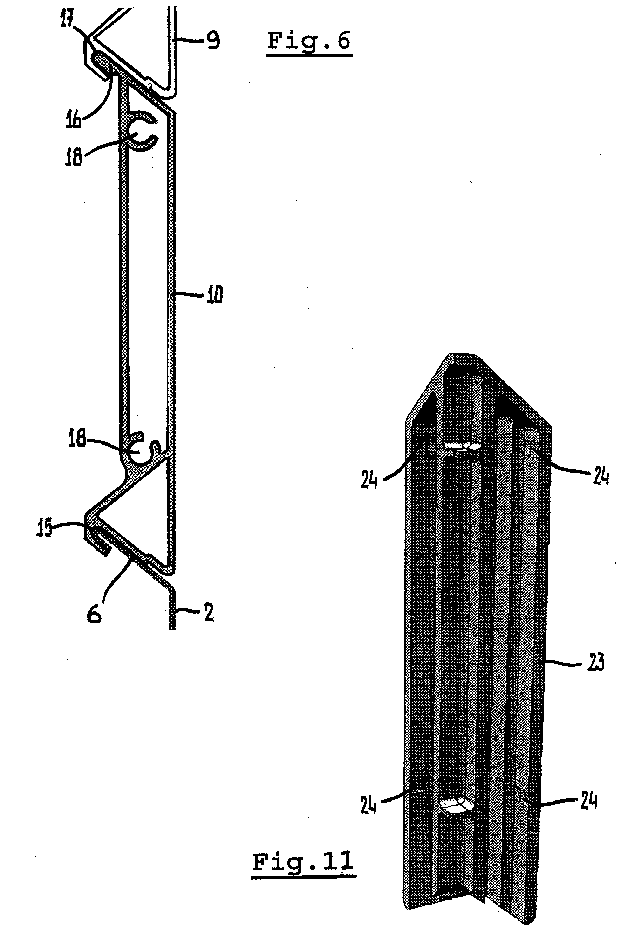

The manner in which the extension walls are positioned on top of the respective side walls (or on top of preceding extension walls, whatever the case may be) now will be explained while referring to fig.6-10.

Fig.6 illustrates a cross-section according to VI-VI in fig.4. Part of side wall 2, extension wall 10 and part of extension wall 9 are visible. The extension wall 10 at its lower end is provided with a recess 15 for receiving the edge section 6 of the side wall 2. Likewise, the top of the extension wall 10 is provided with an edge section 16 that is received in a recess provided at the lower end of the extension wall 9.

It is noted that in the embodiments illustrated in fig.2 and fig.3 the extension walls 7 and 8, respectively, do not need to be provided with such an upper edge section.

The cooperation between the edge sections 6 (16) and recesses 15 (17) is such that the extension walls 10 (9) are maintained in their position under the influence of gravity. In this position the outer surfaces of the side wall 2 and extension walls 10 and 9 (shown at the right-hand side) lie flush. Positioning an extension wall on top of a side wall can be accomplished without any specialised tools and can be carried out by a single person.

Fig.6 shows clearly that, for example, the extension walls 10 are extrusion profiles (for example made of aluminum) provided with two holes 18 which, for reasons to be explained further below, are threaded.

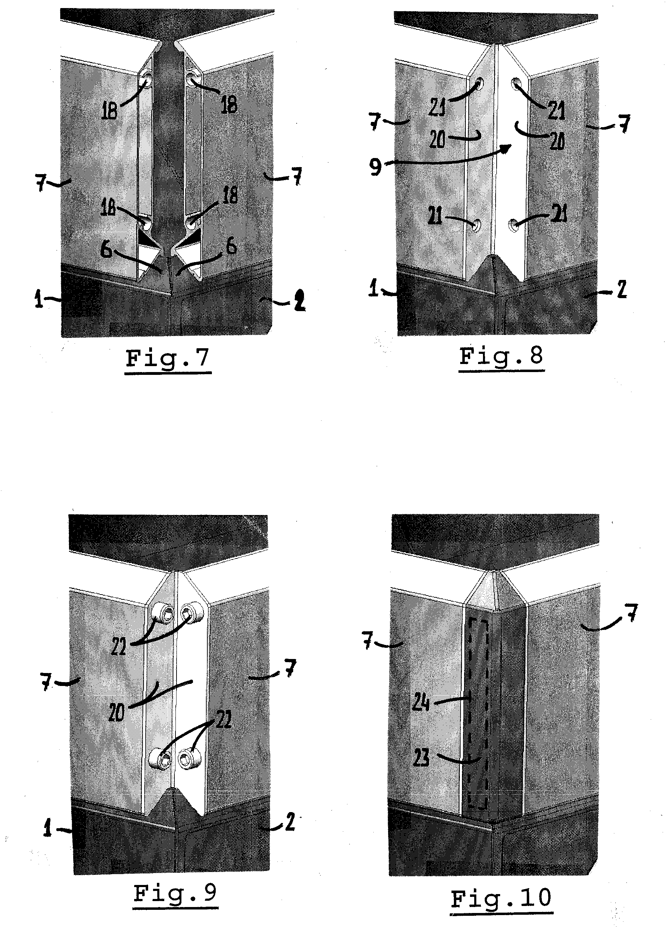

Fig.7 shows a corner region where two extension walls 7 meet. The extension walls 7 are positioned on top of the side walls 1 and 2. There is, however, not yet any connection between said adjacent extension walls.

Fig.8 shows the same corner region, however after positioning an angled plate 19 having two wings 20. Said wings 20 are provided with holes 21 which coincide with the threaded holes 18 in the extension walls 7 (see fig.7). The contour of the wings 20 substantially corresponds with the profile of the extension walls 7 (or, at least, does not project therebeyond).

In fig.9 bolts 22 are introduced into the holes 21 in the wings 20 of the angled plate 19 and threadably secured into the threaded holes 18 of the extension walls. As a result the extension walls 7 are now firmly interconnected through the angled plate 19, thus making removal of the extension walls 7 from the respective side walls 1 and 2 impossible without firstly disengaging at least some of the bolts 22.

It is noted that also other ways of interconnecting adjacent extension walls are conceivable. For example, the angled plate (or a corresponding member) could be integrated with one of the extension walls, such that only bolts should be used at one side in said corner region.

Fig.10 shows the same corner region of the hopper after application of a cover 23. Said cover is also illustrated in fig.11 in a view from behind. As illustrated, it comprises recesses or depressions 24 which will snappingly cooperate with the heads of the bolts 22 for keeping the cover in its position. The outer surface of the cover 23 lies flush with the outer surface of the adjoining extension walls 7 and could be provided with depressions (indicated in dotted lines 24 in fig.23) for receiving reflector means, information sheets or alike.

The invention is not limited to the embodiments described before which may be varied widely within the scope of the invention as defined by the appending claims.

## Claims

1. Hopper for receiving goods, such as for example agricultural goods, comprising a bottom wall (5) and a number of side walls (1-4) extending upwardly from said bottom wall, wherein the side walls belonging to each pair of adjacent side walls enclose an angle and wherein the side walls at their top are provided with an edge section (6,16) extending inclined relative to the respective side wall, wherein wall extensions (7-14) are positioned on top of the side walls (1-4) of at least one pair of adjacent side walls, which wall extensions at their lower end each are provided with recesses (15,17) for matingly receiving the inclined edge sections (6,16) of the corresponding side walls, and wherein said wall extensions are detachably interconnected by connecting means (19),
wherein the configuration of the inclined edge sections (6,16) and corresponding recesses (15,17) and of the connecting means (19) and corresponding parts of the wall extensions (7-14) is such that, when adjacent wall extensions (7-14) are not connected by the connecting means (19), engaging a wall extension (7-14) with its corresponding side wall (1-4), or disengaging it therefrom, is possible through a relative movement between said wall extension (7-14) as a whole and an adjacent wall extension (7-14) as a whole along the direction of the inclined edge section (6,16) of said wall extension without any contact between the adjacent extension walls (7-14) **characterized in that** the wall extensions (7, 14) are fabricated in aluminum, and **in that** the connection between a side wall (1-4) and a corresponding wall extension (7-14) occurs solely through the cooperation between the edge section (6-16) of a side wall (1-4) and the respective recess (15, 17) in the wall extension (7-14).

2. Hopper according to claim 1, wherein all side walls (1-4) are provided with such wall extensions (7-14).

3. Hopper according to claim 1 or 2, wherein the recess (15,17) in each wall extension (7-14) is dimensioned such, that an outer surface of the wall extension (7-14) is substantially flush with an outer surface of the corresponding side wall (1-4).

4. Hopper according to claim 1, 2 or 3, having a rectangular outline with four side walls (1-4).

5. Hopper according to any of the previous claims, wherein the edge sections (6,16) of the side walls (1-4) are inclined upwardly and inwardly.

6. Hopper according to any of the previous claims, wherein the connecting means comprise angled plates (19) each having two wings (20) connected to the adjacent wall extensions by mounting means (21,22).

7. Hopper according to claim 6, wherein each wing is provided with holes (21) which, in the operative position of the angled plate (19), are aligned with threaded holes (18) in the frontal ends of the adjacent wall extensions (7-14) for receiving therein bolts (22), screws or alike.

8. Hopper according to claim 7, wherein the wall extensions (7-14) have a cross sectional profile and wherein the wings (20) of the angled plate (19) have such dimensions as not to extend beyond the cross sectional profile of the wall extensions.

9. Hopper according to claim 8, wherein each angled plate (19) is covered by a releasable cover (23).

10. Hopper according to claim 9, wherein the cover (23) is provided with engagement means releasably cooperating with the heads of the bolts, screws or alike.

11. Hopper according to claim 10, wherein the cover (23) has an outer wall extending substantially flush with the outer surface of the wall extensions (7-14).

12. Hopper according to any of the claims 9-11, wherein the cover (23) is provided with at least one depression (24) for receiving a reflector means or alike.

13. Hopper according to any of the previous claims, wherein the wall extensions (7-14) are lengths of extrusion profiles.

14. Hopper according to any of the previous claims, wherein the wall extensions (7-14) at their top are provided with edge sections (6,16) extending inclined upwardly.

15. Hopper according to any of the previous claims, wherein at least some of the adjacent wall extensions (7-14) have different heights.

16. Wall extension (7-14) presenting all the features of the wall extension disclosed in any one of the previous claims and being thus constructed and evidently intended for use in the hopper as claimed in any one of the previous claims.

## Patentansprüche

1. Fülltrichterbehältnis zum Aufnehmen von Gütern, wie zum Beispiel landwirtschaftlichen Gütern, das eine Bodenwand (5) und eine Anzahl von Seitenwänden (1-4) aufweist, die sich von der Bodenwand aus aufwärts erstrecken, wobei die Seitenwände, die zu jedem Paar angrenzender Seitenwände gehören, einen Winkel einschließen und wobei die Seitenwände an ihrem oberen Ende mit einem Randbereich (6,16) versehen sind, der sich relativ zu der betreffenden Seitenwand geneigt erstreckt, wobei Wand-Erweiterungen (7-14) am oberen Ende der Seitenwände (1-4) von mindestens einem Paar angrenzender Seitenwände positioniert sind, welche Wand-Erweiterungen an ihrem unteren Ende jeweils mit Aussparungen (15,17) versehen sind zum zusammenpassenden Aufnehmen der geneigten Randbereiche (6,16) der korrespondierenden Seitenwände, und wobei die besagten Wand-Erweiterungen durch Verbindungsmittel (19) lösbar miteinander verbunden sind, wobei die Anordnung der geneigten Randbereiche (6,16) und korrespondierenden Aussparungen (15,17) und der Verbindungsmittel (19) und korrespondierenden Teile der Wand-Erweiterungen (7-14) derart ist, dass, wenn angrenzende Wand-Erweiterungen (7-14) nicht durch die Verbindungsmittel (19) verbunden sind, ein in-Eingriff-Bringen einer Wand-Erweiterung (7-14) mit ihrer korrespondierenden Seitenwand (1-4), oder ein außer-Eingriff-Bringen davon möglich ist durch eine relative Bewegung zwischen besagter Wand-Erweiterung (7-14) als ein Ganzes und einer angrenzenden Wand-Erweiterung (7-14) als ein Ganzes entlang der Richtung des geneigten Randbereichs (6,16) von besagter Wand-Erweiterung, ohne irgendeinen Kontakt zwischen den angrenzenden Erweiterungswänden (7-14), **dadurch gekennzeichnet, dass** die Wand-Erweiterungen (7, 14) aus Aluminium angefertigt sind, und dadurch, dass die Verbindung zwischen einer Seitenwand (1-4) und einer korrespondierenden Wand-Erweiterung (7-14) ausschließlich auftritt durch die Kooperation zwischen dem Randbereich (6-16) einer Seitenwand (1-4) und der entsprechenden Aussparung (15,17) in der Wand-Erweiterung (7-14).

2. Fülltrichterbehältnis gemäß Anspruch 1, wobei alle Seitenwände (1-4) mit solchen Wand-Erweiterungen (7-14) bereitgestellt sind.

3. Fülltrichterbehältnis gemäß Anspruch 1 oder 2, wobei die Aussparung (15,17) in jeder Wand-Erweiterung (7-14) derart dimensioniert ist, dass eine äußere Fläche der Wand-Erweiterung (7-14) im Wesentlichen bündig ist mit einer äußeren Fläche der korrespondierenden Seitenwand (1-4).

4. Fülltrichterbehältnis gemäß Anspruch 1, 2 oder 3, der eine rechteckige Außenkontur mit vier Seitenwänden (1-4) hat.

5. Fülltrichterbehältnis gemäß einem der vorherigen Ansprüche, wobei die Randbereiche (6,16) der Seitenwände (1-4) aufwärts und einwärts geneigt sind.

6. Fülltrichterbehältnis gemäß einem der vorherigen Ansprüche, wobei die Verbindungsmittel aufweisen: abgewinkelte Platten (19), von denen jede zwei Schenkel (20) hat, die mit den angrenzenden Wand-Erweiterungen durch Montagemittel (21,22) verbunden sind.

7. Fülltrichterbehältnis gemäß Anspruch 6, wobei jeder Schenkel mit Löchern (21) versehen ist, welche, in der operativen Position der abgewinkelten Platte (19), ausgerichtet sind zu Gewindelöchern (18) in den stirnseitigen Enden der angrenzenden Wand-Erweiterungen (7-14) zum Aufnehmen von Bolzen (22), Schrauben oder dergleichen darin.

8. Fülltrichterbehältnis gemäß Anspruch 7, wobei die Wand-Erweiterungen (7-14) ein Querschnittsprofil haben und wobei die Schenkel (20) der abgewinkelten Platte (19) solche Abmessungen haben, um sich nicht über das Querschnittsprofil der Wand-Erweiterungen hinaus zu erstrecken.

9. Fülltrichterbehältnis gemäß Anspruch 8, wobei jede abgewinkelte Platte (19) von einer lösbaren Abdeckung (23) abgedeckt ist.

10. Fülltrichterbehältnis gemäß Anspruch 9, wobei die Abdeckung (23) versehen ist mit Eingriffsmitteln, die lösbar mit den Köpfen der Bolzen, Schrauben oder dergleichen kooperieren.

11. Fülltrichterbehältnis gemäß Anspruch 10, wobei die Abdeckung (23) eine äußere Wand hat, die sich im Wesentlichen bündig zu der äußeren Fläche der Wand-Erweiterungen (7-14) erstreckt.

12. Fülltrichterbehältnis gemäß einem der Ansprüche 9-11, wobei die Abdeckung (23) versehen ist mit mindestens einer Vertiefung (24) zum Aufnehmen eines Reflektormittels oder dergleichen.

13. Fülltrichterbehältnis gemäß einem der vorherigen Ansprüche, wobei die Wand-Erweiterungen (7-14) Längen von Strangpressprofilen sind.

14. Fülltrichterbehältnis gemäß einem der vorherigen Ansprüche, wobei die Wand-Erweiterungen (7-14) an ihren oberen Enden mit Randbereichen (6,16) versehen sind, die sich aufwärts geneigt erstrecken.

15. Fülltrichterbehältnis gemäß einem der vorherigen Ansprüche, wobei mindestens manche der angrenzenden Wand-Erweiterungen (7-14) unterschiedliche Höhen haben.

16. Wand-Erweiterung (7-14), die alle die Merkmale der Wand-Erweiterung zeigt, die in einem der vorherigen Ansprüche offenbart ist, und daher erstellt und offensichtlich für die Verwendung in dem Fülltrichterbehältnis, wie es in einem der vorherigen Ansprüche beansprucht ist, vorgesehen ist.

## Revendications

1. Trémie pour recevoir des biens, tels que par exemple des biens agricoles, comprenant une paroi de fond (5) et un certain nombre de parois de côté (1 à 4) s'étendant vers le haut à partir de ladite paroi de fond, dans laquelle les parois de côté appartenant à chaque paire de parois de côté adjacentes forment un angle et dans laquelle les parois de côté au niveau de leur dessus sont pourvues d'une section de bord (6, 16) s'étendant inclinée par rapport à la paroi de côté respective, dans laquelle des extensions de paroi (7 à 14) sont positionnées sur le dessus des parois de côté (1 à 4) d'au moins une paire de parois de côté adjacentes, lesquelles extensions de paroi au niveau de leur extrémité inférieure sont chacune pourvues d'évidements (15, 17) pour recevoir par appariement les sections de bord inclinées (6, 16) des parois de côté correspondantes, et dans laquelle lesdites extensions de paroi sont raccordées entre elles de façon détachable par des moyens de raccordement (19), dans laquelle la configuration des sections de bord inclinées (6, 16) et d'évidements correspondants (15, 17) et des moyens de raccordement (19) et de parties correspondantes des extensions de paroi (7 à 14) est telle que, lorsque des extensions de paroi adjacentes (7 à 14) ne sont pas raccordées par les moyens de raccordement (19), une mise en prise d'une extension de paroi (7 à 14) avec sa paroi de côté correspondante (1 à 4), ou une mise hors de prise de celle-ci, est possible par un mouvement relatif entre ladite extension de paroi (7 à 14) dans son ensemble et une extension de paroi adjacente (7 à 14) dans son ensemble le long de la direction de la section de bord inclinée (6, 16) de ladite extension de paroi sans un contact quelconque entre les parois d'extension adjacentes (7 à 14), **caractérisée en ce que** les extensions de paroi (7, 14) sont fabriquées en aluminium, et **en ce que** le raccordement entre une paroi de côté (1 à 4) et une extension de paroi correspondante (7 à 14) se produit uniquement par la coopération entre la section de bord (6 à 16) d'une paroi de côté (1 à 4) et l'évidement respectif (15, 17) dans l'extension de paroi (7 à 14).

2. Trémie selon la revendication 1, dans laquelle toutes les parois de côté (1 à 4) sont pourvues de telles extensions de paroi (7 à 14).

3. Trémie selon la revendication 1 ou 2, dans laquelle l'évidement (15, 17) dans chaque extension de paroi (7 à 14) est dimensionné de sorte qu'une surface externe de l'extension de paroi (7 à 14) soit sensiblement de niveau avec une surface externe de la paroi de côté correspondante (1 à 4).

4. Trémie selon la revendication 1, 2 ou 3, ayant un contour rectangulaire avec quatre parois de côté (1 à 4).

5. Trémie selon l'une quelconque des revendications précédentes, dans laquelle les sections de bord (6, 16) des parois de côté (1 à 4) sont inclinées vers le haut et vers l'intérieur.

6. Trémie selon l'une quelconque des revendications précédentes, dans laquelle les moyens de raccordement comprennent des plaques coudées (19) ayant chacune deux ailes (20) raccordées aux extensions de paroi adjacentes par des moyens de montage (21, 22).

7. Trémie selon la revendication 6, dans laquelle chaque aile est pourvue de trous (21) qui, dans la position opérationnelle de la plaque coudée (19), sont alignés avec des trous filetés (18) dans les extrémités avant des extensions de paroi adjacentes (7 à 14) pour y recevoir des boulons (22), des vis ou similaires.

8. Trémie selon la revendication 7, dans laquelle les extensions de paroi (7 à 14) ont un profil en coupe transversale et dans laquelle les ailes (20) de la plaque coudée (19) ont des dimensions telles qu'elles ne s'étendent pas au-delà du profil en coupe transversale des extensions de paroi.

9. Trémie selon la revendication 8, dans laquelle chaque plaque coudée (19) est recouverte d'un couvercle amovible (23).

10. Trémie selon la revendication 9, dans laquelle le couvercle (23) est pourvu de moyens de mise en prise coopérant de façon amovible avec les têtes des boulons, des vis ou similaires.

11. Trémie selon la revendication 10, dans laquelle le couvercle (23) a une paroi externe s'étendant sensiblement de niveau avec la surface externe des extensions de paroi (7 à 14).

12. Trémie selon l'une quelconque des revendications 9 à 11, dans laquelle le couvercle (23) est pourvu d'au moins un enfoncement (24) pour recevoir un moyen réflecteur ou similaire.

13. Trémie selon l'une quelconque des revendications précédentes, dans laquelle les extensions de paroi (7 à 14) sont des longueurs de profilés d'extrusion.

14. Trémie selon l'une quelconque des revendications précédentes, dans laquelle les extensions de paroi (7 à 14) au niveau de leur dessus sont pourvues de sections de bord (6, 16) s'étendant inclinées vers le haut.

15. Trémie selon l'une quelconque des revendications précédentes, dans laquelle au moins certaines des extensions de paroi adjacentes (7 à 14) ont des hauteurs différentes.

16. Extension de paroi (7 à 14) présentant toutes les particularités de l'extension de paroi divulguée dans l'une quelconque des revendications précédentes et étant ainsi construite et évidemment destinée à une utilisation dans la trémie telle que revendiquée dans l'une quelconque des revendications précédentes.
